(19) Europäisches Patentamt
European Patent Office
Office européen des brevets

(11) **EP 3 876 149 A1**

(12) **EUROPÄISCHE PATENTANMELDUNG**

(43) Veröffentlichungstag:
**08.09.2021  Patentblatt 2021/36**

(51) Int Cl.:
***G06K 9/00*** *(2006.01)*

(21) Anmeldenummer: **21168842.9**

(22) Anmeldetag: **17.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.04.2019  DE 102019110345**
**18.04.2019  DE 102019110344**

(62) Dokumentnummer(n) der früheren Anmeldung(en) nach Art. 76 EPÜ:
**20170194.3 / 3 726 425**

(71) Anmelder:
• **Garcia, Markus**
**8834 Schindellegi (CH)**

• **Zellweger, Thomas**
**3629 Oppligen (CH)**

(72) Erfinder:
• **Garcia, Markus**
**8834 Schindellegi (CH)**
• **Zellweger, Thomas**
**3629 Oppligen (CH)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

Bemerkungen:
Diese Anmeldung ist am 16-04-2021 als Teilanmeldung zu der unter INID-Code 62 erwähnten Anmeldung eingereicht worden.

(54) **VERFAHREN ZUM PHYSIKALISCHEN, INSBESONDERE ZUM OPTISCHEN, ERFASSEN ZUMINDEST EINES NUTZUNGSOBJEKTES**

(57)     Die Erfindung betrifft ein Verfahren zum physikalischen, insbesondere zum optischen, Erfassen zumindest eines Nutzungsobjektes umfassend den Schritt einer Durchführung zumindest eines physikalischen Erfassungsvorgangs, zum Beispiel durch einen Nutzer und/oder einer Durchführungsvorrichtung, insbesondere zumindest einer Fotographie, des Nutzungsobjektes, sodass das Nutzungsobjekt derart erfasst wird, dass eine durch den Erfassungsvorgang erfasste Abbildung des Nutzungsobjektes identisch oder maßstabsskaliert identisch mit dem auf einem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

**Fig. 1**

EP 3 876 149 A1

**Beschreibung**

Die vorliegende Anmeldung betrifft ein Verfahren zum physikalischen, insbesondere zum optischen Erfassen zumindest eines Nutzungsobjekts sowie eine entsprechende Vorrichtung. Bisherige Methoden zur Zuordnung eines Nutzungsobjekts zu einer Nutzungsobjektklasse sind zwar kostengünstig, jedoch recht ungenau.

In der Regel wird hierzu eine Fotografie eines Nutzungsobjekts gemacht, um dies anhand deren strukturellen und/oder haptischen Merkmale identifizieren zu können. Hierzu wurde zwar oftmals eine Datenbank benutzt, um das auf der Fotografie abgebildete Nutzungsobjekt mit in einer Datenbank hinterlegten Nutzungsobjekten zu vergleichen, jedoch war dieser Vergleich oftmals fehlerhaft und ungenau, da es also im Vergleich oftmals auf optische und/oder datentechnische Kleinigkeiten ankommt. Ein Ziel der vorliegenden Anmeldung ist es nun, derartige Ungenauigkeiten und/oder auftretende Fehler in dem Abgleichprozess zwischen dem aufgenommenen Nutzungsobjekt und einem in der Datenbank hinterlegten Nutzungsobjekt zu vermeiden.

Eine Lösung des vorstehenden Problems bildet daher der hierbei beanspruchte und vorgestellte Patentanspruch 1.

Es ist daher eine Aufgabe der vorliegenden Erfindung, ein Verfahren zur physikalischen, insbesondere zur optischen Erfassung zumindest eines Nutzungsobjekts anzubieten, welches nicht nur kostengünstig und zeitsparend ist, sondern zudem eine ganz besonders hohe Genauigkeit im Abgleich zwischen einem Nutzungsobjekt und einem in einer Datenbank hinterlegten Nutzungsobjekt bildet, um ein Nutzungsobjekt eindeutig, vorzugsweise eineindeutig identifizieren zu können.

Gemäß zumindest einer Ausführungsform umfasst das hier vorgestellte Verfahren zur physikalischen, insbesondere zur optischen, Erfassung zumindest eines Nutzungsobjektes, zumindest ein Bereitstellen eines Nutzungsobjektes. Bei dem Nutzungsobjekt kann es sich generell um ein, einer Nutzung zugeführtes oder zuzuführendes oder einer Nutzung enthaltenes, Objekt, insbesondere dreidimensionales Objekt handeln. Dabei bedeutet der Begriff "nutzen" im Sinne der Anmeldung jedwede Handhabung hinsichtlich eines Zweckes.

Gemäß zumindest einer Ausführungsform wird insbesondere in einem zweiten Schritt zumindest eine Verarbeitungseinheit bereitgestellt, mittels welcher das Nutzungsobjekt und/oder einem Nutzungsobjekt eindeutig, vorzugsweise eineindeutig zugeordnetes Identifikationsmittel physikalisch erfasst wird, woraus zumindest ein Kennwert des Nutzungsobjektes gewonnen wird.

Bei der Verarbeitungseinheit kann es sich um eine Rechner- und/oder Speichereinheit handeln. Vorzugsweise ist die Verarbeitungseinheit auch dazu eingerichtet und dafür vorgesehen, Fotografien anzufertigen. Hierzu kann die Verarbeitungseinheit zumindest eine Kamera oder zumindest einen Teil einer Kamera aufweisen.

Zum Beispiel ist das Nutzungsobjekt tragbar ausgebildet, was heißt, dass das Nutzungsobjekt nicht an einem Boden oder an einem mit dem Bodenelement verbundenen Handhabungsvorrichtung verbindbar ist. "Tragbar" kann insbesondere im Sinne der Erfindung heißen, dass das Verarbeitungselement derartige Abmessungen und ein derartiges Gewicht aufweist, als dass dieses dazu eingerichtet und dafür vorgesehen ist, händisch insbesondere mit einer Hand gehalten zu werden. Alternativ hierzu kann die Verarbeitungseinheit auch mit einem Boden, auf welchem das Nutzungsobjekt aufgestellt ist, lösbar oder unlösbar verbunden sein. Eine derartige Verbindung kann über die obig beschriebene Handhabungsvorrichtung hergestellt sein. In dieser Ausführungsform kann die Verarbeitungseinheit entlang von Führungswegen, beispielsweise entlang zumindest einer Schiene oder eines Schienensystems relativ zu dem Nutzungsobjekt geführt werden.

Gemäß zumindest einer Ausführungsform wird insbesondere in einem dritten Schritt eine Nutzungsobjektklassifikation durchgeführt, insofern, als dass der Kennwert mit einem in einer Datenbank der Verarbeitungseinheit und/oder mit einer Datenbank einer externen CPU verglichen wird, indem die Verarbeitungseinheit und/oder die CPU und/oder der Nutzer selbst, ein dem Kennwert entsprechendes Datenobjekt auswählt und in einem Bildschirm der Verarbeitungseinheit darstellt, sodass ein Kamerabild des Nutzungsobjekts zumindest mit dem Datenobjekt zumindest teilweise optisch auf den Bildschirm überlagert und/oder nebeneinander dargestellt wird.

Bei dem Kennwert kann es sich um eine reelle Zahl größer 0 handeln, vorstellbar ist jedoch auch, dass sich der Kennwert aus verschiedenen Teilkennwerten zusammensetzt. Ein Nutzungsobjekt kann daher zum Beispiel im Hinblick auf eine Außenfarbe einen Teilkennwert aufweisen, im Hinblick auf Maximalabmessungen in Höhe und Breite und/oder Tiefe einen weiteren Kennwert, sowie in Hinblick auf Gewicht einen weiteren Teilkennwert. Zum Beispiel kann daher ein solcher Kennwert durch die Kombination dieser drei Teilkennwerte gebildet sein. Eine Kombination kann in Form einer Summe oder eines Bruches stattfinden. Vorzugsweise ist der Kennwert jedoch in Form einer Summe aus den vorgenannten Teilkennwerten bestimmt. Die einzelnen Teilkennwerte können jedoch auch mit unterschiedlicher Gewichtung in die Aufsummation einbezogen werden. Hierzu ist es vorstellbar, dass jeder Teilkennwert als Gewichtsfaktor einen ersten Gewichtsfaktor, der zweite Teilkennwert mit einem zweiten Gewichtsfaktor und ein dritter Teilkennwert mit einem dritten Gewichtsfaktor aufweist gemäß der Formel:

$$K = G1 * K1 + G2 * K2 + G3 * K3,$$

wobei die Werte K1 bis K3 die jeweiligen Teilwerte darstellen und die Faktoren G1 bis G3 (welche reelle positive Zahlen darstellen) jeweilig Gewichtsfaktoren der Teilkennwerte bezeichnen. Bei der hier vorgestellten Nutzungsobjektklassifikation kann es sich um einen rein optischen Vergleich zwischen dem mit einer obig genannten Kamera aufgenommenen Nutzungsobjekt und einer in optischer Weise entsprechend hinterlegten Nutzungsobjektvorlage in einer Datenbank handeln.

Möglich ist jedoch auch, dass das Nutzungsobjekt datentechnisch in einzelne Objektklassen unterteilt ist oder kategorisiert werden kann. Insofern wird dann statt eines (analogen) und optischen Vergleichs zwischen aufgenommenen Nutzungsobjekt und in der Datenbank hinterlegten Nutzungsobjekt ein datentechnischer, beispielsweise analoger Vergleich vorgenommen. Das Nutzungsobjekt wird daher durch eine Umwandlungseinheit in einzelne Daten, zum Beispiel Datenklassen, zerlegt, wobei diese dann einzeln oder gemeinsam mit entsprechend in der Datenbank hinterlegten Daten oder Datenklassen verglichen wird.

Bei dem Datenobjekt kann es sich entsprechend um ein in der Datenbank hinterlegtes Vorlagebild des entsprechenden Nutzungsobjekts handeln. Ist einmal der Kennwert des Nutzungsobjekts ermittelt, kann vorstellbar sein, dass anhand des Kennwertes das entsprechende Datenbankobjekt, welches das Nutzungsobjekt optisch abbilden kann, ausgewählt wird, um auf dem Bildschirm neben dem tatsächlich aufgenommenen Nutzungsobjekt dargestellt zu werden.

Gemäß zumindest einer Ausführungsform wird in einem weiteren Schritt ein Erfassungsvorgang zum Beispiel durch einen Nutzer und/oder eine Durchführungsvorrichtung, des Nutzungsobjektes durchgeführt, sodass das Nutzungsobjekt derart erfasst wird, dass eine durch den Erfassungsvorgang erfasste Abbildung des Nutzungsobjektes identisch oder maßstabskaliert identisch mit dem auf dem Bildschirm dargestellten Datenbankobjekt zeitgleich dargestellt wird. "Identisch" heißt in diesem Zusammenhang, ein anhand des Kennwertes und/oder der optischen Maße des Nutzungsobjektes größte Näherung an einen entsprechend in der Datenbank hinterlegtes Nutzungsobjekt. Dies kann heißen, dass das Nutzungsobjekt, welches durch die Verarbeitungseinheit erfasst werden kann, nicht in allen Maßen und Abnutzungen dem in der Datenbank entsprechend des Kennwertes identifizierten Nutzungsobjekt entspricht, jedoch anhand von vorfestgelegten Mindestmaßen die größte Übereinstimmung hergestellt wird.

Denkbar ist, dass es sich bei dem Nutzungsobjekt um ein Fahrzeug, beispielsweise einen 3er BMW handelt. Das Nutzungsobjekt selber kann zum Beispiel einen Spoiler aufweisen und/oder auch tiefer gelegt sein. Ist nun ein entsprechendes Nutzungsobjekt nicht auch mit einem zusätzlichen Spoiler und einer tiefer gelegten Version in der Datenbank hinterlegt, sondern weist die Datenbank lediglich generell ein Basismodell eines 3er BMWs auf, kann die Verarbeitungseinheit und/oder die Datenbank und/oder die externe CPU trotzdem dieses Basis-3er-Modell als nächstliegende Übereinstimmung mit dem Nutzungsobjekt auswählen, zum Beispiel auch deshalb weil die Kennwerte des Nutzungsobjektes beispielsweise anhand einer Fahrzeugplakette identisch sind.

Mit der oben genannten Nutzungsobjektklassifikation in Verbindung mit der entsprechenden Durchführung auf Basis des physikalischen Erfassungsvorgangs kann daher erreicht sein, dass durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

Bei dem Fahrzeugtypen kann es sich wie obig bereits beschrieben zum Beispiel um einen BMW der 3er-Klasser oder um jeden anderen auf den deutschen Straßen oder dem internationalen Straßensystem zugelassenes Fahrzeug handeln.

Gemäß zumindest einer Ausführungsform umfasst das Verfahren zum physikalischen, insbesondere zum optischen Erfassen zumindest eines Nutzungsobjektes zunächst einen ersten Schritt, wonach ein Nutzungsobjekt bereitgestellt wird, wobei in einem zweiten Schritt zumindest eine Verarbeitungseinheit bereitgestellt wird, mittels welcher das Nutzungsobjekt und/oder einem Nutzungsobjekt eindeutig, vorzugsweise eineindeutig zugeordnetes Identifikationsmittel physikalisch erfasst wird, woraus zumindest ein Kennwert des Nutzungsobjektes gewonnen wird.

In einem nächsten Schritt wird eine Nutzungsobjektklassifikation durchgeführt, insofern nämlich, als dass der Kennwert mit zumindest einem in einer Datenbank der Verarbeitungseinheit und/oder mit einer Datenbank in einer externen CPU verglichen wird und die Verarbeitungseinheit 2 und/oder die CPU und/oder der Nutzer selbst ein dem Kennwert entsprechendes Datenbankobjekt auswählt und in einem Bildschirm der Verarbeitungseinheit darstellt, sodass ein Kamerabild des Nutzungsobjektes zusammen mit dem Datenbankobjekt zumindest teilweise optisch auf dem Bilderschirm überlagert und/oder nebeneinander dargestellt wird.

Des Weiteren wird in einem darauf folgenden Schritt eine Durchführung zumindest eines physikalischen Erfassungsvorgangs, zum Beispiel durch einen Nutzer und/oder eine Durchführungsvorrichtung, insbesondere zumindest eine Fotografie des Nutzungsgeräte durchgeführt, sodass das Nutzungsobjekt derart erfasst wird, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird, wobei durch den Erfassungsvorgang das Nutzungsobjekt von der Verarbeitungseinheit 2 und/oder der CPU und/oder dem Nutzer zumindest eine Nutzungsobjektklasse, zum Beispiel einem Fahrzeugtyp, zugeordnet wird.

Gemäß zumindest einer Ausführungsform umfasst der physikalische Erfassungsvorgang zumindest eine zeitliche Erfassungssequenz, wo während der Erfassungssequenz zumindest zwei verschiedene Aufnahmen des Nutzungsobjektes durchgeführt werden, wobei jede Aufnahme zumindest einem Datenbankobjekt zugeordnet ist.

Zum Beispiel erfasst die Erfassungssequenz eine Anleitung an eine Durchführungsvorrichtung und/oder an einen Nutzer, das Nutzungsobjekt unter verschiedenen Winkeln, verschiedenen Abständen mit verschiedenen Farbkontrasten oder ähnlichem zu fotografieren, um eine Identifikation mit einem in der Datenbank hinterlegten Nutzungsobjekt zu vereinfachen.

Gemäß mindestens einer Ausführungsform erfolgt nach der kennwertmäßigen Erfassung und zur Nutzungsobjekt-Klassenidentifikation auf dem Bildschirm zumindest eine zeitlich sequentielle Erfassungsanleitung zur Erfassung zumindest zweier Aufnahmen. Insbesondere wird ein derartiger Verfahrensschritt entlang dieser seitlichen Erfassungssequenz abgefahren. Die Erfassungssequenz kann daher im Hinblick auf den Ort, auf eine Aufnahmehelligkeit oder ähnliches genaue Anleitungen an den Nutzer und/oder eine Durchführungsvorrichtung aufweisen, sodass entlang vorgegebener Punkte die Verarbeitungseinheit, welche vorzugsweise eine optische Kamera umfasst, das Nutzungsobjekt optisch abwehrt.

Zur genaueren Orientierung an speziellen Orientierungspunkten des Nutzungsobjekts kann an dem Nutzungsobjekt zumindest ein, vorzugsweise jedoch mehrere Orientierungspunkte vorzugsweise auch lösbar angebracht sein. Solche Orientierungspunkte können Markierungselemente sein, welche die Kamera der Verarbeitungseinheit besonders einfach aufnehmen kann. Beispielsweise handelt es sich bei den Markierungselementen um Bar- oder Strichcodes und/oder um NFC-Chips.

Derartige Markierungselemente können daher auch passive Bauelemente sein. Denkbar ist jedoch auch, dass solche Markierungselemente lösbar auf das Nutzungsobjekt aufgebracht, zum Beispiel aufgeklebt werden können. Solche Nutzungsobjekte können eine eigene Energieversorgung, beispielsweise eine Batterieversorgung, aufweisen. Solche mit einer Batterie versehenden Markierungselemente können im optisch sichtbaren oder im unsichtbaren, zum Beispiel Infrarot- oder Mikrowellenbereich elektromagnetische Strahlen aussenden, welche von einem Ortungselement der Verarbeitungseinheit detektiert werden können und wodurch die Verarbeitungseinheit dazu in der Lage ist, festzustellen, in welcher Position es sich relativ zu dem Nutzungsobjekt befindet.

Alternativ oder zusätzlich ist jedoch auch vorstellbar, dass die Markierungselemente virtuelle Markierungselemente sind, welche aus der Datenbank geladen werden und welche ebenso wie das Nutzungsobjekt selbst aus der Datenbank als Bild, beispielsweise als ein drittes Bild zusammen mit einer Fotografie des Nutzungsobjekts und dementsprechend virtuell aus der Datenbank geladenen Erscheinung des Nutzungsobjekts

auf dem Bildschirm des Nutzungsobjektes dargestellt werden, können daher ebenso wie die Datenbankobjekte (welche die Nutzungsobjekte in virtueller Hinsicht abbilden können und welche in der Datenbank gespeichert sind), ebenso als weitere Datenbankobjekte in der Datenbank der Verarbeitungseinheit und/oder der externen CPU hinterlegt sein. Zum Beispiel kann mit ein und demselben Kennwert sowohl das Nutzungsobjekt) also auch das weitere Datenbankobjekt (zumindest ein Markierungselement) gemeinsam in die Verarbeitungseinheit geladen und/oder auf dem Bildschirm der Verarbeitungseinheit dargestellt werden.

Gemäß zumindest einer Ausführungsform gibt die zeitlich sequentielle Fassungsanleitung dem Nutzer einen Erfassungsabstand und/oder einen Erfassungswinkel relativ zum Nutzungsobjekt vor.

Wie obig bereits erwähnt, leistet daher die Erfassungsanleitung einen genauen Ablaufplan, vorzugsweise in vollautomatischer Hinsicht in Bezug auf die Aufnahme der einzelnen Abbildungen, insbesondere Fotografien der Nutzungsobjekte.

Gemäß zumindest einer Ausführungsform ist der Kennwert von einem Identifikationsmittel, zum Beispiel einer Nutzungsplakette des Nutzungsobjektes, entnommen, insbesondere gescannt. Der Kennwert wird daher ebenso auch vorzugsweise vollautomatisch von der Verarbeitungseinheit, welche zum Beispiel eine optische Kamera aufweist, aufgenommen. Vorzugsweise ist es für den Benutzer und/oder die Durchführungsvorrichtung nicht mehr nötig, den Kennwert manuell in die Verarbeitungseinheit eingeben zu müssen.

Gemäß zumindest einer Ausführungsform umfasst oder ist die Verarbeitungseinheit ein Smartphone oder eine Kamera. Ist die Verarbeitungseinheit ein Smartphone oder eine Kamera, kann diese wie obig bereits erwähnt, händisch handhabbar sein.

Gemäß zumindest einer Ausführungsform ist die Verarbeitungseinheit an einem Aufnahmeelement befestigt, welches sich entsprechend den Vorgaben durch die Erfassungssequenz relativ zu dem Nutzungsobjekt bewegt. Die Verarbeitungseinheit kann sich daher mit dem Aufnahmeelement zusammen entsprechend der Erfassungssequenz relativ zu dem Nutzungsobjekt bewegen. Zwar kann in einem derartigen Fall die Verarbeitungseinheit ein Smartphone oder eine Kamera sein oder umfassen und die Verarbeitungseinheit kann trotzdem auch eine handhabbare Verarbeitungseinheit sein. Dies ist jedoch an einer größeren Einheit, nämlich dem Aufnahmeelement befestigt. Vorzugsweise umfasst das Aufnahmeelement alle nötigen Komponenten, um sich vollautomatisch oder durch manuelle Kraft des Nutzers entlang des Nutzungsobjekts bewegen zu lassen.

Gemäß zumindest einer Ausführungsform handelt es sich bei dem Aufnahmeelement um eine Drohne, welche entsprechend der Erfassungssequenz relativ zu dem Nutzungsobjekt gelenkt wird, um die einzelnen Aufnahmen vorzugsweise entlang oder an den oben genannten Markierungselementen durchführen zu können.

Im Sinne der Erfindung kann es sich bei einer "Drohne" um ein unbemanntes Fahrzeug, vorzugsweise um ein unbemanntes Fluggerät mit einem oder mehreren Helikopterrotoren handeln. Die Drohne kann dann kabellos oder kabelgebunden über eine Steuereinrichtung von dem Nutzer und/oder von der Durchführungsvorrichtung manuell oder auch voll automatisch gesteuert und damit gelenkt werden.

Mittels der Drohne ist es insofern möglich, dass bei einer Aufnahme des Nutzungsobjekts um das Nutzungsobjekt herum sehr platzsparend vorgegangen werden kann. Insbesondere kann auf einen Sicherheitsabstand des Nutzungsobjekts zu anderen Nutzungsobjekten, beispielsweise anderen Autos eines Autosalons verzichtet sein, sodass die Drohne vorzugsweise schwebend die einzelnen zu fotografierenden Positionen entsprechend der Ermittlungssequenz abfährt, ohne dass andere nicht beteiligte Nutzungsobjekte sehr weit weggefahren werden müssten. Die Drohne würde dann einfach von oben sich dem Nutzungsobjekt nähern und beispielsweise auch in das Interieur des Autos hineinfahren, um auch Innenaufnahmen aufnehmen zu können.

Gemäß zumindest einer Ausführungsform umfasst die Erfassungssequenz ebenso auch Steuerungsdaten zur Flughöhe der Drohne, sodass die Drohne in seitlicher Hinsicht, vorzugsweise vollautomatisch die Erfassungssequenz abfliegt. Ist einmal beispielsweise anhand der obig genannten Markierungselemente eine bestimmte Erfassungssequenz, die von dem Nutzer und/oder Durchführungsvorrichtung vorgegeben sein kann, durch die Verarbeitungseinheit aufgerufen, kann ein vollautomatischer Prozess ablaufen, an dessen Ende die eindeutige bzw. vorzugsweise die eineindeutige Identifikation des Nutzungsobjekts mit einem in der Datenbank hinterlegten Nutzungsobjekt stehen kann.

Des Weiteren umfasst die vorliegende Erfindung eine entsprechende Vorrichtung, insbesondere eine Vorrichtung zur physikalischen, insbesondere zur optischen Erfassung zumindest eines Nutzungsobjekts.

Dabei weist die hier beschriebene Vorrichtung die gleichen Merkmale auf, wie das hier beschriebene Verfahren und umgekehrt.

Insbesondere umfasst die hier beschriebene Vorrichtung zumindest eine Verarbeitungseinheit, mittels welcher ein Nutzungsobjekt und/oder einem Nutzungsobjekt eindeutig, vorzugsweise eineindeutig, ein zugeordnetes Identifikationsmittel physikalisch erfasst wird, woraus zumindest ein Kennwert des Nutzungsobjektes gewinnbar ist und weiter wobei die Verarbeitungseinheit und/oder eine CPU dazu eingerichtet und dafür vorgesehen ist, eine Nutzungsobjektklassifikation insofern durchzuführen, als dass ein Kennwort des Nutzungsobjektes mit zumindest einem in einer Datenbank der Verarbeitungseinheit und/oder mit einer Datenbank einer externen CPU vergleichbar ist und die Verarbeitungseinheit und/oder die CPU und/oder der Nutzer selbst, einem Kennwert entsprechendes Datenbankobjekt auswählt und einen Bildschirm der Verarbeitungseinheit darstellt, sodass ein Kamerabild des Nutzungsobjektes zusammen mit dem Datenobjekt zumindest teilweise optisch auf dem Bildschirm überlagerbar und/oder nebeneinander darstellbar ist.

Gemäß zumindest einer Ausführungsform umfasst die hier vorgestellte Vorrichtung zur physikalischen, insbesondere zur optischen Erfassung zumindest eines Nutzungsobjektes, zumindest ein Bereitstellen eines Nutzungsobjektes zumindest eine Verarbeitungseinheit, mittels welcher ein Nutzungsobjekt und/oder ein dem Nutzungsobjekt eindeutig, vorzugsweise eineindeutig, zugeordnetes Identifikationsmittel physikalisch erfassbar ist, woraus zumindest ein Kennwert des Nutzungsobjektes gewinnbar ist, und weiter wobei die Verarbeitungseinheit und/oder eine CPU dazu eingerichtet und dafür vorgesehen ist eine Nutzungsobjektklassifikation insofern durchzuführen, als dass ein Kennwert des Nutzungsobjektes mit zumindest einem in einer Datenbank der Verarbeitungseinheit und/oder mit einer Datenbank einer externen CPU vergleichbar ist, und die Verarbeitungseinheit und/oder die CPU und/oder der Nutzer selbst, ein dem Kennwert entsprechendes Datenbankobjekt auswählt und in einem Bildschirm der Verarbeitungseinheit darstellt, sodass ein Kamerabild des Nutzungsobjektes zusammen mit dem Datenbankobjekt zumindest teilweise optisch auf dem Bildschirm überlagerbar und/oder nebeneinander darstellbar ist,

Erfindungsgemäß ist mittels der Verarbeitungseinheit und/oder der CPU zumindest ein physikalischer Erfassungsvorgang, insbesondere zumindest eine Fotographie, des Nutzungsobjektes, auf Basis des auf dem Bildschirm abgebildeten Datenbankobjektes durchführbar, sodass der Nutzer das Nutzungsobjekt derart erfasst, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zuordenbar wird.

Bei dem Nutzungsobjekt kann es sich generell um ein, einer Nutzung zugeführtes oder zuzuführendes oder einer Nutzung enthaltenes Objekt, insbesondere dreidimensionales Objekt, handeln. Dabei bedeutet der Begriff "nutzen" im Sinne der Anmeldung jedwede Handhabung hinsichtlich eines Zweckes.

Bei der Verarbeitungseinheit kann es sich um eine Rechner- und/oder Speichereinheit handeln. Vorzugsweise ist die Verarbeitungseinheit auch dazu eingerichtet und dafür vorgesehen, Fotografien anzufertigen. Hierzu kann die Verarbeitungseinheit zumindest eine Kamera oder zumindest einen Teil einer Kamera aufweisen. Zum Beispiel ist das Nutzungsobjekt tragbar ausgebildet, was heißt, dass das Nutzungsobjekt nicht an einem Boden oder an einem mit dem Bodenelement verbundenen Handhabungsvorrichtung verbindbar ist. "Tragbar" kann insbesondere im Sinne der Erfindung heißen, dass das Verarbeitungselement derartige Abmessungen und ein derartiges Gewicht aufweist, als dass dieses dazu eingerichtet und dafür vorgesehen ist, händisch insbesondere mit einer Hand gehalten zu werden. Alternativ hierzu kann die Verarbeitungseinheit auch mit einem Boden, auf welchem das Nutzungsobjekt aufgestellt ist, lösbar oder unlösbar verbunden sein. Eine derartige Verbindung kann über die obig beschriebene Handhabungsvorrichtung hergestellt sein. In dieser Ausführungsform kann die Verarbeitungseinheit entlang von Führungswegen, beispielsweise entlang zumindest einer Schiene oder eines Schienensystems relativ zu dem Nutzungsobjekt geführt werden.

Bei dem Kennwert kann es sich um eine reelle Zahl größer 0 handeln, vorstellbar ist jedoch auch, dass sich der Kennwert aus verschiedenen Teilkennwerten zusammensetzt. Ein Nutzungsobjekt kann daher zum Beispiel im Hinblick auf eine Außenfarbe einen Teilkennwert aufweisen im Hinblick auf Maximalabmessungen in Höhe und Breite und/oder Tiefe einen weiteren Kennwert, sowie in Hinblick auf Gewicht einen weiteren Teilkennwert. Zum Beispiel kann daher ein solcher Kennwert durch die Kombination dieser drei Teilkennwerte gebildet sein. Eine Kombination kann in Form einer Summe oder eines Bruches stattfinden. Vorzugsweise ist der Kennwert jedoch in Form einer Summe aus den vorgenannten Teilkennwerten bestimmt. Die einzelnen Teilkennwerte können jedoch auch mit unterschiedlicher Gewichtung in die Aufsummation einbezogen werden. Hierzu ist es vorstellbar, dass jeder Teilkennwert als Gewichtsfaktor einen ersten Gewichtsfaktor, der zweite Teilkennwert mit einem zweiten Gewichtsfaktor und ein dritter Teilkennwert mit einem dritten Gewichtsfaktor aufweist gemäß der Formel:

$$K = G1 * K1 + G2 * K2 + G3 * K3,$$

wobei die Werte K1 bis K3 die jeweiligen Teilwerte darstellen und die Faktoren G1 bis G3 (welche reelle positive Zahlen darstellen) jeweilig Gewichtsfaktoren der Teilkennwerte bezeichnen. Bei der hier vorgestellten Nutzungsobjektklassifikation kann es sich um einen rein optischen Vergleich zwischen dem mit einer obig genannten Kamera aufgenommenen Nutzungsobjekt und einer in optischer Weise entsprechend hinterlegten Nutzungsobjektvorlage in einer Datenbank handeln.

Möglich ist jedoch auch, dass das Nutzungsobjekt datentechnisch in einzelne Objektklassen unterteilt ist oder kategorisiert werden kann. Insofern wird dann statt eines (analogen) und optischen Vergleichs zwischen aufgenommenen Nutzungsobjekt und in der Datenbank hinterlegten Nutzungsobjekt ein datentechnischer, beispielsweise analoger Vergleich vorgenommen. Das Nutzungsobjekt wird daher durch eine Umwandlungseinheit in einzelne Daten, zum Beispiel Datenklassen, zerlegt, wobei diese dann einzeln oder gemeinsam mit entsprechend in der Datenbank hinterlegten Daten oder Datenklassen verglichen wird.

Bei dem Datenobjekt kann es sich entsprechend um ein in der Datenbank hinterlegtes Vorlagebild des entsprechenden Nutzungsobjekts handeln. Ist einmal der Kennwert des Nutzungsobjekts ermittelt, kann vorstellbar sein, dass anhand des Kennwertes das entsprechende Datenbankobjekt, welches das Nutzungsobjekt optisch abbilden kann, ausgewählt wird, um auf dem Bildschirm neben dem tatsächlich aufgenommenen Nutzungsobjekt dargestellt zu werden.

Gemäß zumindest einer Ausführungsform ist die Verarbeitungseinheit dazu eingerichtet und dafür vorgesehen, dass ein Erfassungsvorgang zum Beispiel durch einen Nutzer und/oder eine Durchführungsvorrichtung des Nutzungsobjektes durchgeführt wird, sodass das Nutzungsobjekt derart erfasst wird, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird. "Identisch" heißt in diesem Zusammenhang, ein anhand des Kennwertes und/oder der optischen Maße des Nutzungsobjektes größte Näherung an ein entsprechend in der Datenbank hinterlegtes Nutzungsobjekt. Dies kann heißen, dass das Nutzungsobjekt, welches durch die Verarbeitungseinheit erfasst werden kann, nicht in allen Maßen und Abnutzungen dem in der Datenbank entsprechend des Kennwertes identifizierten Nutzungsobjekt entspricht, jedoch anhand von vorfestgelegten Mindestmaßen die größte Übereinstimmung hergestellt wird.

Denkbar ist, dass es sich bei dem Nutzungsobjekt um ein Fahrzeug, beispielsweise einen 3er BMW handelt. Das Nutzungsobjekt selber kann zum Beispiel einen Spoiler aufweisen und/oder auch tiefer gelegt sein. Ist nun ein entsprechendes Nutzungsobjekt nicht auch mit einem zusätzlichen Spoiler und einer tiefer gelegten Version in der Datenbank hinterlegt, sondern weist die Datenbank lediglich generell ein Basismodell eines 3er BMWs auf, kann die Verarbeitungseinheit und/oder die Datenbank und/oder die externe CPU trotzdem dieses Basis-3er-Modell als nächstliegende Übereinstimmung mit dem Nutzungsobjekt auswählen, zum Beispiel auch deshalb weil die Kennwerte des Nutzungsobjektes beispielsweise anhand einer Fahrzeugplakette identisch sind.

Mit der oben genannten Nutzungsobjektklassifikation in Verbindung mit der entsprechenden Durchführung auf Basis des physikalischen Erfassungsvorgangs kann daher erreicht sein, dass durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

Bei dem Fahrzeugtypen kann es sich wie obig bereits beschrieben zum Beispiel um einen BMW der 3er-Klasser oder um jeden anderen auf den deutschen Straßen oder dem internationalen Straßensystem zugelassenes Fahrzeug handeln.

Gemäß zumindest einer Ausführungsform umfasst der physikalische Erfassungsvorgang zumindest eine zeitliche Erfassungssequenz, wo während der Erfassungssequenz zumindest zwei verschiedene Aufnahmen des Nutzungsobjektes durchgeführt werden, wobei jede Aufnahme zumindest einem Datenbankobjekt zugeordnet ist.

Zum Beispiel erfasst die Erfassungssequenz eine Anleitung an eine Durchführungsvorrichtung und/oder an einen Nutzer, das Nutzungsobjekt unter verschiedenen Winkeln, verschiedenen Abständen mit verschiedenen Farbkontrasten oder ähnlichem zu fotografieren, um eine Identifikation mit einem in der Datenbank hinterlegten Nutzungsobjekt zu vereinfachen.

Gemäß mindestens einer Ausführungsform erfolgt nach der kennwertmäßigen Erfassung und zur Nutzungsobjekt-Klassenidentifikation auf dem Bildschirm zumindest eine zeitlich sequentielle Erfassungsanleitung der zeitlichen Erfassungssequenz zur Erfassung zumindest zweier Aufnahmen. Insbesondere ist die Verarbeitungseinheit dazu eingerichtet und dafür vorgesehen, dass sie entlang dieser seitlichen Erfassungssequenz abgefahren wird. Die Erfassungssequenz kann daher im Hinblick auf den Ort, auf eine Aufnahmehelligkeit oder ähnliches genaue Anleitungen an den Nutzer und/oder eine Durchführungsvorrichtung aufweisen, sodass entlang vorgegebener Punkte die Verarbeitungseinheit, welche vorzugsweise eine optische Kamera umfasst, das Nutzungsobjekt optisch abwehrt.

Zur genaueren Orientierung an speziellen Orientierungspunkten des Nutzungsobjekts kann an dem Nutzungsobjekt zumindest ein, vorzugsweise jedoch mehrere Orientierungspunkte vorzugsweise auch lösbar angebracht sein. Solche Orientierungspunkte können Markierungselemente sein, welche die Kamera der Verarbeitungseinheit besonders einfach aufnehmen kann. Beispielsweise handelt es sich bei den Markierungselementen um Bar- oder Strichcodes und/oder um NFC-Chips.

Derartige Markierungselemente können daher auch passive Bauelemente sein. Denkbar ist jedoch auch, dass solche Markierungselemente lösbar auf das Nutzungsobjekt aufgebracht, zum Beispiel aufgeklebt werden können. Solche Nutzungsobjekte können eine eigene Energieversorgung, beispielsweise eine Batterieversorgung, aufweisen. Solche mit einer Batterie versehenden Markierungselemente können im optisch sichtbaren oder im unsichtbaren, zum Beispiel Infrarot- oder Mikrowellenbereich elektromagnetische Strahlen aussenden, welche von einem Ortungselement der Verarbeitungseinheit detektiert werden können und wodurch die Verarbeitungseinheit dazu in der Lage ist, festzustellen, in welcher Position es sich relativ zu dem Nutzungsobjekt befindet.

Alternativ oder zusätzlich ist jedoch auch vorstellbar, dass die Markierungselemente virtuelle Markierungselemente sind, welche aus der Datenbank geladen werden und welche ebenso, wie das Nutzungsobjekt selbst, aus der Datenbank als Bild, beispielsweise als ein drittes Bild zusammen mit einer Fotografie des Nutzungsobjekts, und dementsprechend virtuell aus der Datenbank geladenen Erscheinung des Nutzungsobjekts, auf dem Bildschirm des Nutzungsobjektes dargestellt werden, können daher ebenso wie die Datenbankobjekte (welche die Nutzungsobjekte in virtueller Hinsicht abbilden können und welche in der Datenbank gespeichert sind), als weitere Datenbankobjekte in der Datenbank der Verarbeitungseinheit und/oder der externen CPU hinterlegt sein. Zum Beispiel kann mit ein und demselben Kennwert sowohl das Nutzungsobjekt) also auch das weitere Datenbankobjekt (zumindest ein Markierungselement) gemeinsam in die Verarbeitungseinheit geladen und/oder auf dem Bildschirm der Verarbeitungseinheit dargestellt werden.

Gemäß zumindest einer Ausführungsform gibt die zeitlich sequentielle Fassungsanleitung dem Nutzer einen Erfassungsabstand und/oder einen Erfassungswinkel relativ zum Nutzungsobjekt vor.

Wie obig bereits erwähnt, leistet daher die Erfassungsanleitung einen genauen Ablaufplan, vorzugsweise in vollautomatischer Hinsicht in Bezug auf die Aufnahme der einzelnen Abbildungen, insbesondere Fotografien der Nutzungsobjekte.

Gemäß zumindest einer Ausführungsform ist der Kennwert von einem Identifikationsmittel, zum Beispiel einer Nutzungsplakette des Nutzungsobjektes entnommen und/oder entnehmbar, insbesondere gescannt. Der Kennwert wird daher ebenso auch vorzugsweise vollautomatisch von der Verarbeitungseinheit, welche zum Beispiel eine optische Kamera aufweist, aufgenommen. Vorzugsweise ist es für den Benutzer und/oder die Durchführungsvorrichtung nicht mehr nötig, den Kennwert manuell in die Verarbeitungseinheit eingeben zu müssen. Gemäß zumindest einer Ausführungsform umfasst oder ist die Verarbeitungseinheit ein Smartphone oder eine Kamera. Ist die Verarbeitungseinheit ein Smartphone oder eine Kamera, kann diese wie obig bereits erwähnt, händisch handhabbar sein.

Gemäß zumindest einer Ausführungsform ist die Verarbeitungseinheit an einem Aufnahmeelement befestigt, welches sich entsprechend den Vorgaben durch die Erfassungssequenz relativ zu dem Nutzungsobjekt bewegt. Die Verarbeitungseinheit kann sich daher mit dem Aufnahmeelement zusammen entsprechend der Erfassungssequenz relativ zu dem Nutzungsobjekt bewegen. Zwar kann in einem derartigen Fall die Verarbeitungseinheit ein Smartphone oder eine Kamera sein oder umfassen und die Verarbeitungseinheit kann trotzdem auch eine handhabbare Verarbeitungseinheit sein. Dies ist jedoch an einer größeren Einheit, nämlich dem Aufnahmeelement befestigt. Vorzugsweise umfasst das Aufnahmeelement alle nötigen Komponenten, um sich vollautomatisch oder durch manuelle Kraft des Nutzers entlang des Nutzungsobjekts bewegen zu lassen.

Gemäß zumindest einer Ausführungsform handelt es sich bei dem Aufnahmeelement um eine Drohne, welche entsprechend der Erfassungssequenz relativ zu dem Nutzungsobjekt gelenkt wird, um die einzelnen Aufnahmen vorzugsweise entlang oder an den oben genannten Markierungselementen durchführen zu können.

Im Sinne der Erfindung kann es sich bei einer "Drohne" um ein unbemanntes Fahrzeug, vorzugsweise um ein unbemanntes Fluggerät mit einem oder mehreren Helikopterrotoren handeln. Die Drohne kann dann kabellos oder kabelgebunden über eine Steuereinrichtung von dem Nutzer und/oder von der Durchführungsvorrichtung manuell oder auch voll automatisch gesteuert und damit gelenkt werden.

Mittels der Drohne ist es insofern möglich, dass bei einer Aufnahme des Nutzungsobjekts um das Nutzungsobjekt herum sehr platzsparend vorgegangen werden kann. Insbesondere kann auf einen Sicherheitsabstand des Nutzungsobjekts zu anderen Nutzungsobjekten, beispielsweise anderen Autos eines Autosalons verzichtet sein, sodass die Drohne vorzugsweise schwebend die einzelnen zu fotografierenden Positionen entsprechend der Ermittlungssequenz abfährt, ohne dass andere nicht beteiligte Nutzungsobjekte sehr weit weggefahren werden müssten. Die Drohne würde dann einfach von oben sich dem Nutzungsobjekt nähern und beispielsweise auch in das Interieur des Autos hineinfahren, um auch Innenaufnahmen aufnehmen zu können.

Gemäß zumindest einer Ausführungsform umfasst die Erfassungssequenz ebenso auch Steuerungsdaten zur Flughöhe der Drohne, sodass die Drohne in seitlicher Hinsicht, vorzugsweise vollautomatisch die Erfassungssequenz abfliegt. Ist einmal beispielsweise anhand der obig genannten Markierungselemente eine bestimmte Erfassungssequenz, die von dem Nutzer und/oder Durchführungsvorrichtung vorgegeben sein kann, durch die Verarbeitungseinheit aufgerufen, kann ein vollautomatischer Prozess ablaufen, an dessen Ende die eindeutige bzw. vorzugsweise die eineindeutige Identifikation des Nutzungsobjekts mit einem in der Datenbank hinterlegten Nutzungsobjekt stehen kann.

Ein Aspekt der Erfindung kann zudem sein, dass mittels der Verarbeitungseinheit und/oder der CPU zumindest ein physikalischer Erfassungsvorgang, insbesondere zumindest eine Fotografie des Nutzungsobjektes auf Basis des auf dem Bildschirm abgebildeten Datenbank, durchführbar ist, sodass der Nutzer das Nutzungsobjekt derart erfasst, dass eine durch den Erfassungsvorgang erfasste Abbildung des Nutzungsobjektes identisch oder maßstabskaliert identisch mit dem auf dem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zuordenbar wird.

Die weiteren Ausgestaltungen der obig beschriebenen Vorrichtung können in derselben Art und Weise, insbesondere mit denselben Merkmalen wie das obig beschriebene Verfahren dargelegt sein.

Weitere Vorteile und Ausführungsformen ergeben sich aus den beigefügten Zeichnungen.

Darin zeigen:

Fig.1 bis 2C    sowohl eine Vorrichtung als auch ein Verfahren gemäß der hier beschriebenen Erfindung;

Fig. 3A -3E    eine weitere Ausführungsform des hier beschriebenen Verfahrens.

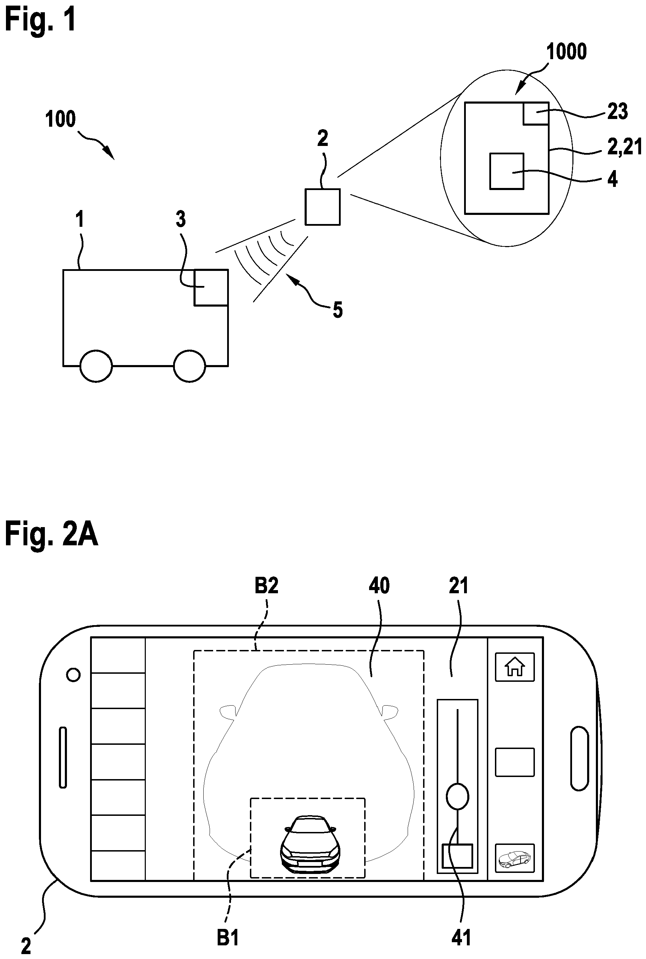

In den Figuren sind gleiche oder gleich wirkende Bestandteile jeweils mit den gleichen Bezugszeichen versehen. In der Figur 1 ist eine erfindungsgemäße Vorrichtung 100 sowie ein erfindungsgemäßes Verfahren gezeigt, wobei die Vorrichtung 100 dazu eingerichtet und vorgesehen ist, ein Nutzungsobjekt in physikalischer Hinsicht insbesondere optisch zu erfassen.

Wie aus der Figur 1 hervorgeht, umfasst die Vorrichtung 100 eine Verarbeitungseinheit 2, mittels welcher ein Nutzungsobjekt 1 und/oder ein Nutzungsobjekt 1 eindeutig und vorzugsweise eineindeutig zugeordnet ist, die das Identifikationsmittel 11 physikalisch erfasst, woraus zumindest ein Kennwert des Nutzungsobjektes gewinnbar ist und weiter wobei die Verarbeitungseinheit 2 und/oder eine CPU dazu eingerichtet und dafür vorgesehen ist, eine Nutzungsobjektklassifikation insofern durchzuführen, als dass ein Kennwert des Nutzungsobjektes zumindest einem in einer Datenbank der Verarbeitungseinheit 2 und/oder mit einer Datenbank einer externen CPU vergleichbar ist und die Verarbeitungseinheit 2 und/oder die CPU und/oder der Nutzer selbst ein dem Kennwert 3 entsprechendes Datenbankobjekt 4 auswählt und in einem Bildschirm der Verarbeitungseinheit 2 darstellt, sodass ein Kamerabild des Nutzungsobjektes 1 zusammen mit dem Datenbankobjekt 4 zumindest teilweise optisch auf dem Bildschirm 21 überlagerbar und/oder nebeneinander darstellbar ist.

Mittels der Verarbeitungseinheit 2 und/oder der CPU ist es möglich, zumindest einen physikalischen Erfassungsvorgang 5 auf Basis des in dem Bildschirm 21 abgebildeten Datenbankobjektes 4 durchzuführen, sodass der Nutzer das Nutzungsobjekt 1 erfasst, dass eine durch den Erfassungsvorgang erfasste Abbildung des Nutzungsobjektes identisch oder maßstabsskaliert identisch, zumindest doch im Wesentlichen identisch, mit dem auf dem Bildschirm 21 dargestellten Datenbankobjekt 4 zeitgleich dargestellt wird, wobei durch den Erfassungsvorgang das Nutzungsobjekt 1 von der Verarbeitungseinheit 2 und/oder der CPU und/oder Nutzer zumindest eine Nutzungsobjektklasse, zum Beispiel einen Fahrzeugtypen zuordenbar ist.

In der Figur 2A ist ein beispielhafter erster Schritt dargestellt, wobei auf dem dort dargestellten Nutzungsobjekt 1, welches in Form eine Smartphones dargestellt ist, auf dem Bildschirm 21 eine Nutzungsobjektklasse (zum Beispiel die Bilder 30), insbesondere in Form eines Beispielfahrzeugtypen, optisch dargestellt ist. Der Beispielfahrzeugtyp ist nicht nur in verkleinerter Form im Bereich B1 auf dem Bildschirm dargestellt, sondern auch in einer vergrößerten, beispielsweise einer 1:1 Form grau schattiert hinterlegt auf dem Bildschirm 21 (siehe Bereich B2) dargestellt.

Diese optisch dargestellte Nutzungsobjektklasse, also dieser dargestellte Fahrzeugtyp dient als Orientierung an dem zu fotografierenden Objekt. Dargestellt ist ebenso auch ein Regler 40, durch dessen Einstellen ein Kontrast und/oder eine Helligkeit des Orientierungsbildes, also insbesondere der Bilder 30, welche jeweils einer optischen Darstellung einer Nutzungsobjektklasse entsprechen, ermöglicht wird. So können Probleme, die bei großer Helligkeit entstehen, eliminiert werden.

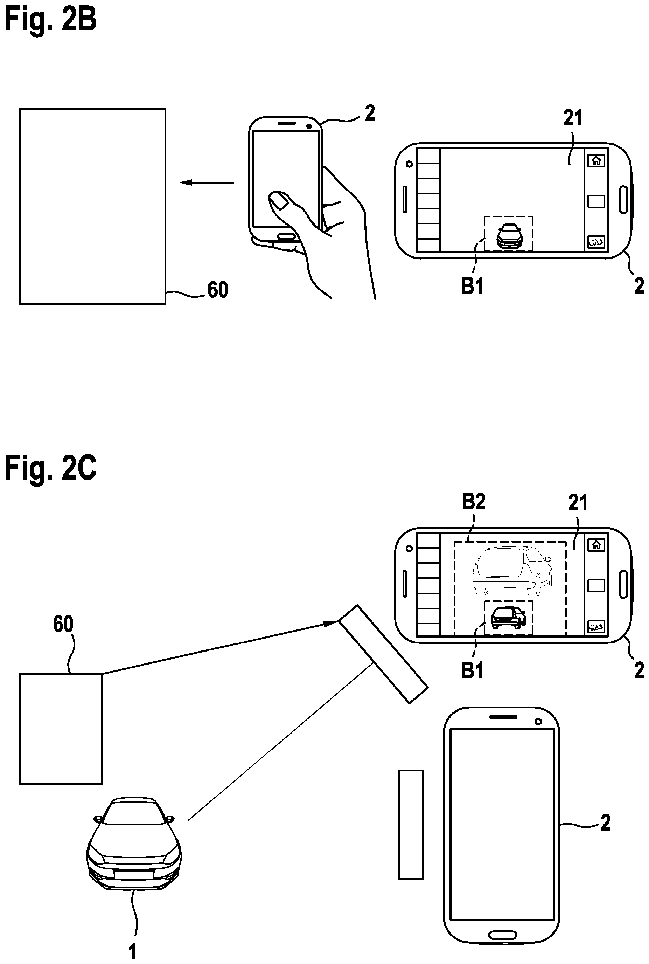

Die Figur 2B zeigt ein kennwertmäßiges Erfassen anhand einer Nutzungsplakette 50 des Nutzungsfahrzeuges. Hierbei wird die Nutzungsplakette 50 optisch durch die Verarbeitungseinheit 2 gescannt. Je nach zu fotografierendem Nutzungsobjekt 1 verändert sich der Winkel, in dem die Verarbeitungseinheit 2, vorliegend beispielhaft als ein Smartphone dargestellt, gehalten werden muss, wodurch eine optimale Qualität für den Vergleichs- und Einordnungsvorgang erzielt werden können.

In der Figur 2C ist in einer weiteren Darstellung dargestellt, dass die Verarbeitungseinheit 2 in verschiedenen Winkelstellungen relativ zum Nutzungsobjekt 1 gehalten werden muss.

Das Obige stellt daher nicht nur den physikalischen Erfassungsvorgang 5 dar, sondern auch die eingangs beschriebene kennwertmäßige Erfassung zur Nutzungsobjektklassifikation.

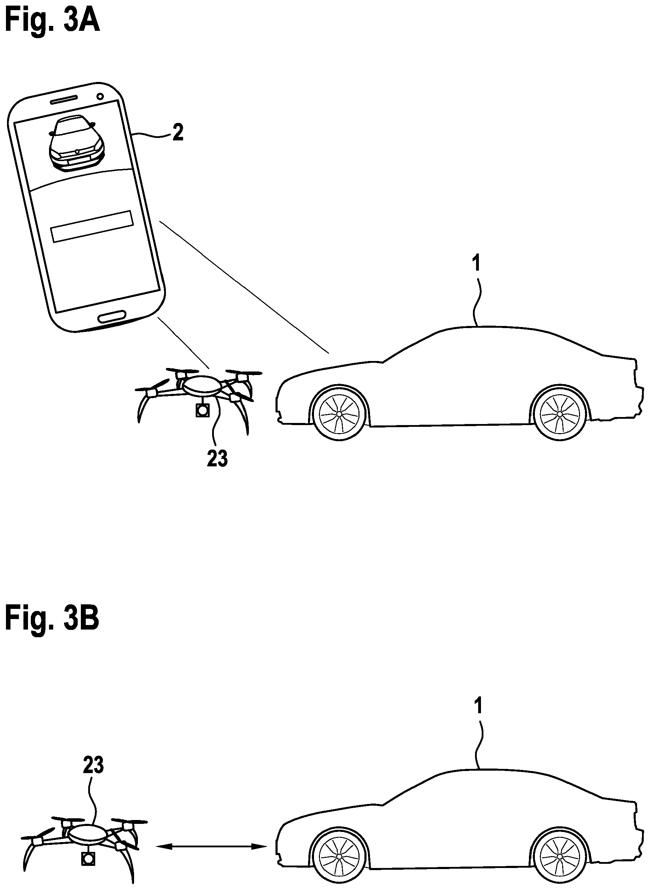

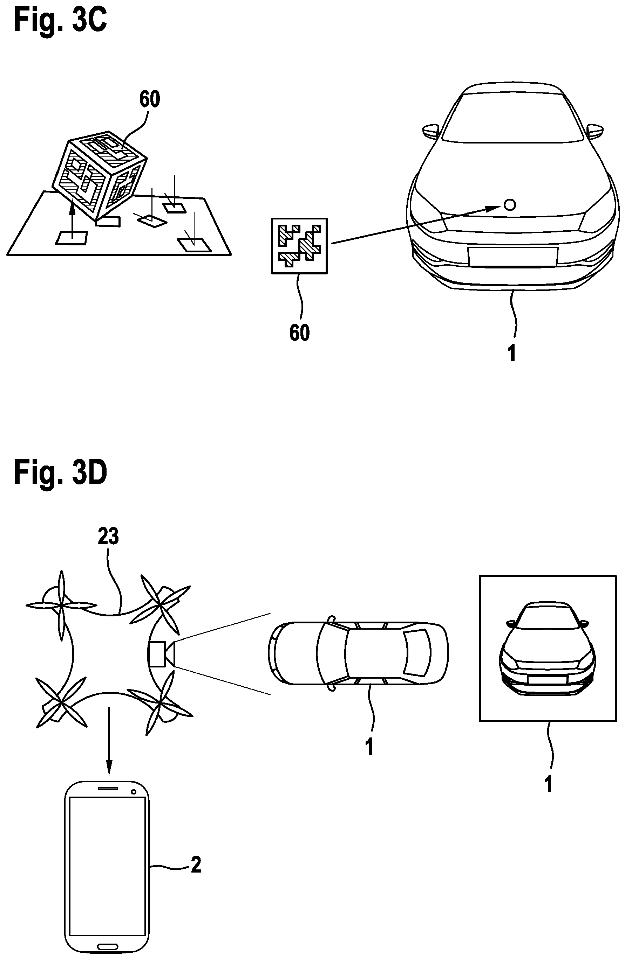

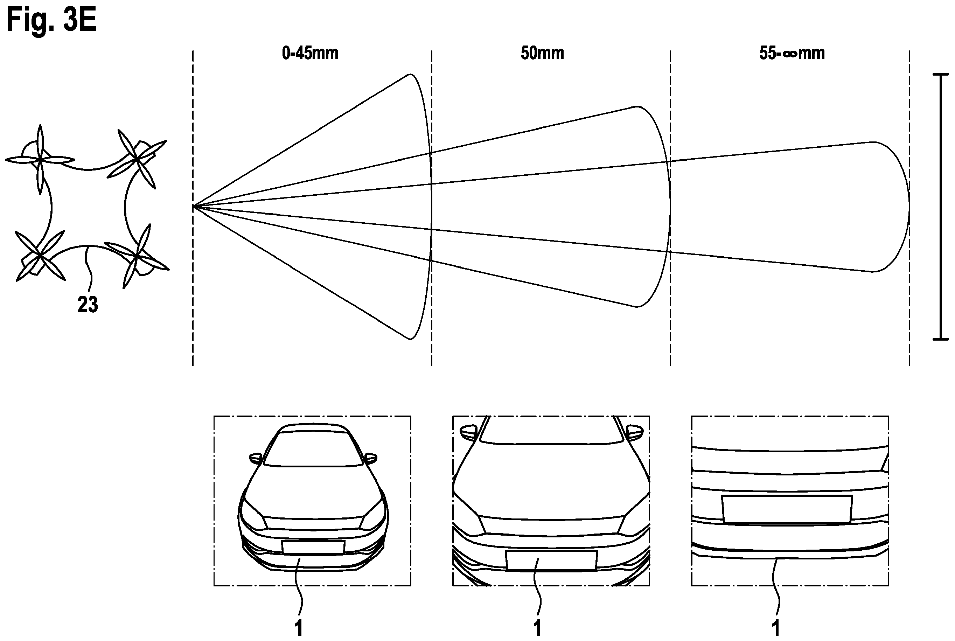

In den Figuren 3 ist in einer weiteren Ausführungsform dargestellt, dass die Verarbeitungseinheit 2 an einem Aufnahmeelement 23, vorliegend einer Drohne, befestigt ist.

Die Figur 3A stellt daher nicht nur eine Drohne 23, sondern ebenso wiederum die Verarbeitungseinheit 2 und das Nutzungsobjekt 1 dar, wobei eine Drohne 23 bei einem Drohnenstart zunächst einen Abstand in die Verarbeitungseinheit 2 vorher eingegeben wird oder von der Erfassungssequenz vorgegeben wird.

Bevor sich daher die Drohne automatisiert und ohne Drohnenpilot orientieren kann, benötigt diese daher nämlich Informationen zum Nutzungsobjekt 1. Anschließend kann die Drohne mit definiertem Abstand vor das Fahrzeug 11 gelegt werden (siehe Figur 3B), um mit Hilfe der Fahrzeugabmessungen jeweils bezogen auf den Startpunkt alle Positionen entsprechend der Erfassungssequenz abzufliegen. In der Figur 3C sind entsprechende Markierungselemente 60 dargestellt, welche entweder auf dem Nutzungsobjekt 1 angebracht sind oder virtuell optisch "darübergelegt" werden.

Bei dem Markieren kann es sich um sogenannte ARUCo-Markierung handeln. Dabei kann es sich um kontrastreiche Symbole handeln, welche speziell für Kameraanwendung entwickelt wurde. Diese können nicht nur Orientierungshelfer, sondern auch Informationen beinhalten. Mit einem solchen Marker kann daher die Drohne 23 den Startpunkt des Drohnenflugs selbst erkennen.

In der Figur 3D ist ein weiterer Ablauf des Drohnenflugs gezeigt, was ebenso auch aus der Figur 3E hervorgeht. In der Figur 3E ist jedoch zusätzlich optisch dargestellt, wie sich eine Brennweite einer Linse, der von der Drohne 23 transportierten Verarbeitungseinheit 2, auf die Aufnahmequalität auswirkt. Auf dem ganz links dargestellten Nutzungsobjekt 1 wurde dieses mit einer Weitwinkelkamera aufgenommen, während das in der Mitte dargestellte Nutzungsobjekt 1 mit einer Normalwinkelkamera und das Nutzungsobjekt 1 ganz rechts mit einer Telekamera aufgenommen wurde. Die Weitwinkelkamera kann einen Abstand von 0 bis 45 mm zum Nutzungsfahrzeug 2 erlauben, die Normalwinkelkamera einen Abstand von etwa 50 mm und ein Teleobjektiv kann einen Abstand ab 55 mm erlauben.

Brennweiten von kleiner 50 mm und größer 50 mm können nämlich unterschiedliche Verzerrungs- und Verzeichnungseffekte erzeugen. Durch die verschiedentliche Verwendung von Brennweiten von beispielsweise 6 mm treten bei den aufgenommenen Bildern somit sichtbare Verzerrungen auf, um einen Vergleich aller Bilder im Anschluss zu haben, sollte eine Nachbearbeitung der aufgenommenen Fotografien nicht erfolgen, sodass die oben genannten verschiedenen Objektive zur Anwendung kommen müssen.

Die Erfindung ist nicht anhand der Beschreibung und der Ausführungsbeispiele beschränkt, vielmehr erfasst die Erfindung jedes neue Merkmal sowie jede Kombination von Merkmalen, was auch insbesondere jede Kombination der Patentansprüche beinhaltet, auch wenn dieses Merkmal oder diese Kombination selbst nicht explizit in den Patentansprüchen oder den Ausführungsbeispielen wiedergegeben ist.

Bezugszeichenliste

| 1 | Nutzungsobjekt |
|---|---|
| 2 | Verarbeitungseinheit |
| 3 | Kennwort |
| 4 | Datenbankobjekt |
| 5 | physikalischer Erfassungsvorgang |
| 11 | Identifikationsmittel |
| 21 | Bildschirm |
| 23 | Aufnahmeelement (Drohne) |
| 30 | Bilder |
| 40 | Regler |
| 50 | Nutzungsplakette |
| 60 | Markierungselemente |

| B1 | Bereich |
|---|---|
| B2 | Bereich |
| 100 | Vorrichtung |
| 1000 | Verfahren |

**Patentansprüche**

1. Verfahren (1000) zum physikalischen Erfassen zumindest eines Nutzungsobjektes (1), umfassend die folgenden Schritte:

   - Bereitstellen des Nutzungsobjektes (1),
   - Bereitstellen zumindest einer Verarbeitungseinheit (2), mittels welcher das Nutzungsobjekt (1) physikalisch erfasst wird, woraus zumindest ein Kennwert (3) des Nutzungsobjektes (1) gewonnen wird, und das Nutzungsobjekt datentechnisch in einzelne Objektklassen unterteilt ist oder kategorisiert wird, sodass. dann statt eines analogen und optischen Vergleichs zwischen dem aufgenommenen Nutzungsobjekt und in der Datenbank hinterlegten Nutzungsobjekt ein datentechnischer Vergleich vorgenommen wird, und weiter wobei das Nutzungsobjekt daher durch eine Umwandlungseinheit in einzelne Daten, also Datenklassen, zerlegt wird, wobei diese dann einzeln oder gemeinsam mit entsprechend in der Datenbank hinterlegten Daten oder Datenklassen verglichen wird, und wobei es sich bei dem Datenobjekt entsprechend um ein in der Datenbank hinterlegtes Vorlagebild des entsprechenden Nutzungsobjekts handelt, sodass, wenn einmal der Kennwert des Nutzungsobjekts ermittelt ist, anhand des Kennwertes das entsprechende Datenbankobjekt, welches das Nutzungsobjekt optisch abbildet, ausgewählt wird, um auf dem Bildschirm neben dem tatsächlich aufgenommenen Nutzungsobjekt dargestellt zu werden, und damit die Durchführung einer Nutzungsobjektklassifikation insofern, als dass der Kennwert (3) mit zumindest einem in einer Datenbank der Verarbeitungseinheit (2) und/oder mit einer Datenbank einer externen CPU verglichen wird, und die Verarbeitungseinheit (2) und/oder die CPU und/oder der Nutzer selbst, ein dem Kennwert (3) entsprechendes Datenbankobjekt (4) auswählt und in einem Bildschirm (21) der Verarbeitungseinheit (2) darstellt, durchgeführt wird, sodass ein Kamerabild des Nutzungsobjektes (1) zusammen mit dem Datenbankobjekt (4) zumindest teilweise optisch auf dem Bildschirm (21) überlagert und/oder nebeneinander dargestellt wird,

   und damit also eine Durchführung zumindest eines physikalischen Erfassungsvorgangs (5), durch einen Nutzer und/oder einer Durchführungsvorrichtung, des Nutzungsobjektes (1) durchgeführt wird, sodass das Nutzungsobjekt (1) derart erfasst wird, dass eine durch den Erfassungsvorgang erfasste Abbildung des Nutzungsobjektes (1) identisch oder maßstabsskaliert identisch mit dem auf dem Bildschirm (21) dargestellten Datenbankobjekt (4) zeitgleich dargestellt wird, wobei durch den Erfassungsvorgang das Nutzungsobjekt (1) von der Verarbeitungseinheit (2) und/oder der CPU und/oder dem Nutzer zumindest einer Nutzungsobjektklassezugeordnet wird.

2. Verfahren (1000) nach Anspruch 1, **dadurch gekennzeichnet, dass** der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei jeder Aufnahme zumindest ein Datenbankobjekt (4) zugeordnet ist.

3. Verfahren (1000) nach Anspruch 2, **dadurch gekennzeichnet, dass** nach der kennwertmäßigen Erfassung und zur Nutzungsobjektklassifikation auf dem Bildschirm (21) zumindest eine zeitlich sequentielle Erfassungsanleitung der zeitlichen Erfassungssequenz zur Erfassung der zumindest zwei Aufnahmen abgefahren wird.

4. Verfahren (1000) nach Anspruch 3, **dadurch gekennzeichnet, dass** die zeitlich sequentielle Erfassungsanleitung dem Nutzer eine Erfassungsabstand und/oder einen Erfassungswinkel relativ zu dem Nutzungsobjekt (1) vorgibt.

5. Verfahren (1000) nach zumindest einem der vorhergehenden Ansprüche, **dadurch gekennzeichnet, dass** der Kennwert (3) von einem Identifikationsmittel (11), zum Beispiel aus einer Nutzungsplakette, des Nutzungsobjektes (1) entnommen, insbesondere gescannt, wird.

6. Verfahren (1000) nach zumindest einem der vorhergehenden Ansprüche, **dadurch gekennzeichnet, dass** dass die Verarbeitungseinheit (2) ein Smartphone, eine Kamera umfasst oder ist.

7. Verfahren (1000) nach Anspruch 3, **dadurch gekennzeichnet, dass** dass die Verarbeitungseinheit (2) an einem Aufnahmeelement (23) befestigt ist, welches sich entsprechend der Vorgaben durch die Erfassungssequenz relativ zu dem Nutzungsobjekt (1) bewegt.

8. Verfahren (1000) nach Anspruch 7, **dadurch gekennzeichnet, dass** das Aufnahmeelement (23) eine Drohne ist, welche entsprechend der Erfassungssequenz relative zu dem Nutzungsobjekt (1) gelenkt wird, um die einzelnen Aufnahmen durchzuführen.

9.  Verfahren (1000) nach Anspruch 8,
    **dadurch gekennzeichnet, dass**
    die Erfassungssequenz ebenso Steuerungsdaten zur Flughöhe der Drohne (23) umfasst, sodass die Drohne (23) in zeitlicher Hinsicht, vorzugsweise vollautomatisch, die Erfassungssequenz abfliegt.

10. Vorrichtung (100) zum physikalischen Erfassen zumindest eines Nutzungsobjektes (1), wobei die Vorrichtung (1000) aufweist:

    - Zumindest eine Verarbeitungseinheit (2), mittels welcher ein Nutzungsobjekt physikalisch erfassbar ist, woraus zumindest ein Kennwert (3) des Nutzungsobjektes (1) gewinnbar ist, wobei

    das Nutzungsobjekt datentechnisch in einzelne Objektklassen unterteilbar ist oder kategorisierbar ist, sodass. dann statt eines analogen und optischen Vergleichs zwischen dem aufgenommenen Nutzungsobjekt und in der Datenbank hinterlegten Nutzungsobjekt ein datentechnischer, Vergleich vornehmbar ist, und weiter wobei das Nutzungsobjekt daher durch eine Umwandlungseinheit in einzelne Daten, also Datenklassen, zerlegbar ist, wobei diese dann einzeln oder gemeinsam mit entsprechend in der Datenbank hinterlegten Daten oder Datenklassen vergleichbar ist, und wobei es sich bei dem Datenobjekt entsprechend um ein in der Datenbank hinterlegtes Vorlagebild des entsprechenden Nutzungsobjekts handelt, sodass wenn einmal der Kennwert des Nutzungsobjekts ermittelt ist, anhand des Kennwertes das entsprechende Datenbankobjekt, welches das Nutzungsobjekt optisch abbildet, auswählbar ist, um auf dem Bildschirm neben dem tatsächlich aufgenommenen Nutzungsobjekt darstellbar zu sein und damit die Durchführung einer Nutzungsobjektklassifikation insofern, als dass der Kennwert (3) mit zumindest einem in einer Datenbank der Verarbeitungseinheit (2) und/oder mit einer Datenbank einer externen CPU vergleichbar ist, und die Verarbeitungseinheit (2) und/oder die CPU und/oder der Nutzer selbst, ein dem Kennwert (3) entsprechendes Datenbankobjekt (4) auswählt und in einem Bildschirm (21) der Verarbeitungseinheit (2) darstellt, durchführbar ist, sodass ein Kamerabild des Nutzungsobjektes (1) zusammen mit dem Datenbankobjekt (4) zumindest teilweise optisch auf dem Bildschirm (21) überlagerbar und/oder nebeneinander darstellbar ist, und damit also eine Durchführung zumindest eines physikalischen Erfassungsvorgangs (5), durch einen Nutzer und/oder einer Durchführungsvorrichtung, des Nutzungsobjektes (1) durchführbar ist, sodass das Nutzungsobjekt (1) derart erfasst wird, dass eine durch den Erfassungsvorgang erfasste Abbildung des Nutzungsobjektes (1) identisch oder maßstabsskaliert identisch mit dem auf dem Bildschirm (21) dargestellten Datenbankobjekt (4) zeitgleich dargestellt wird, wobei durch den Erfassungsvorgang das Nutzungsobjekt (1) von der Verarbeitungseinheit (2) und/oder der CPU und/oder dem Nutzer zumindest einer Nutzungsobjektklasse zuordenbar ist.

EP 3 876 149 A1

**Fig. 1**

**Fig. 2A**

12

# Fig. 2B

# Fig. 2C

**Fig. 3A**

**Fig. 3B**

EP 3 876 149 A1

## Fig. 3C

## Fig. 3D

# Fig. 3E

0-45mm  50mm  55-∞mm

23

1  1  1

EP 3 876 149 A1

**Europäisches Patentamt**
**European Patent Office**
**Office européen des brevets**

## EUROPÄISCHER RECHERCHENBERICHT

Nummer der Anmeldung

EP 21 16 8842

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 108 665 373 A (ALIBABA GROUP HOLDING LTD) 16. Oktober 2018 (2018-10-16) | 1-6,10 | INV. G06K9/00 |
| Y | * Zusammenfassung; Abbildung 2 *<br>* Absatz [0045] - Absatz [0049] *<br>----- | 7-9 | |
| Y | ALMADHOUN RANDA ET AL: "Coverage Path Planning with Adaptive Viewpoint Sampling to Construct 3D Models of Complex Structures for the Purpose of Inspection", 2018 IEEE/RSJ INTERNATIONAL CONFERENCE ON INTELLIGENT ROBOTS AND SYSTEMS (IROS), IEEE, 1. Oktober 2018 (2018-10-01), Seiten 7047-7054, XP033491009, DOI: 10.1109/IROS.2018.8593719<br>* Abbildung 6 *<br>----- | 7-9 | |
| A | US 2018/025392 A1 (HELSTAB EDMOND [CA]) 25. Januar 2018 (2018-01-25)<br>* das ganze Dokument *<br>----- | 1-10 | |

**RECHERCHIERTE SACHGEBIETE (IPC)**

G06K

Der vorliegende Recherchenbericht wurde für alle Patentansprüche erstellt

| Recherchenort | Abschlußdatum der Recherche | Prüfer |
|---|---|---|
| Den Haag | 9. Juli 2021 | Mitzel, Dennis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    ...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 8842

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2021

| Im Recherchenbericht angeführtes Patentdokument | Datum der Veröffentlichung | Mitglied(er) der Patentfamilie | Datum der Veröffentlichung |
|---|---|---|---|
| CN 108665373 A | 16-10-2018 | CN 108665373 A<br>TW 201947451 A<br>WO 2019214313 A1 | 16-10-2018<br>16-12-2019<br>14-11-2019 |
| US 2018025392 A1 | 25-01-2018 | CA 2936854 A1<br>CA 2973917 A1<br>US 2018025392 A1 | 22-01-2018<br>22-01-2018<br>25-01-2018 |

Für nähere Einzelheiten zu diesem Anhang : siehe Amtsblatt des Europäischen Patentamts, Nr.12/82

EPO FORM P0461